# EUROPEAN PATENT SPECIFICATION

(11) **EP 1 228 289 B1**
(45) Date of publication and mention of the grant of the patent: **22.09.2004**
(21) Application number: 00993044.7
(22) Date of filing: 07.11.2000
(51) Int. Cl.: E21B 43/34

(54) **METHOD AND SYSTEM FOR SUPPRESSING AND CONTROLLING SLUG FLOW IN A MULTI-PHASE FLUID STREAM**
VERFAHREN UND SYSTEM ZUM ENTFERNEN UND STEUERN VON ABLAGERUNGEN IN EINEM MEHRPHASIGEN FLÜSSIGKEITSSTROM
PROCEDE ET SYSTEME DE SUPPRESSION ET DE REGULATION D'UN ECOULEMENT A BOUCHONS DANS UN ECOULEMENT DE FLUIDE MULTIPHASE

(30) Priority: 08.11.1999 EP 99203727
(43) Date of publication of application: 07.08.2002
(73) Proprietor: SHELL INTERNATIONALE RESEARCH MAATSCHAPPIJ B.V., 2596 HR Den Haag (NL)
(72) Inventor: HAANDRIKMAN, Gritienus, NL-1031 CM Amsterdam (NL); HENKES, Rudolphus, Aloysius, Wijnandus, Maria, NL-1031 CM Amsterdam (NL); SEELEN, Marinus, Gerardus, Wilhelmus, Maria, NL-1031 CM Amsterdam (NL); VREENEGOOR, Aloysius, Johannes, Nicolaas, NL-1031 CM Amsterdam (NL)
(86) International application number: PCT/EP2000/011034
(87) International publication number: WO 2001/034940

(56) References cited:
- EP-A- 0 410 522
- EP-B- 0 767 699
- US-A- 5 256 171
- US-A- 5 377 714
- US-A- 5 494 067
- US-A- 5 544 672
- US-A- 5 711 338
- PATENT ABSTRACTS OF JAPAN vol. 013, no. 095 (C-573), 6 March 1989 (1989-03-06) & JP 63 274408 A (MITSUBISHI HEAVY IND LTD), 11 November 1988 (1988-11-11) cited in the application

## Description

### Background of the Invention

The invention relates to suppression and the control of slug flow in a multi-phase fluid stream. More particularly, the invention relates to a method and system for suppressing and controlling liquid slugs and gas surges in a stream of multi-phase fluid flowing through a pipeline or a flowline system, which may include a riser section, and a gas/liquid separator or slugcatcher located downstream of the pipeline outlet or the riser section.

In the oil and gas industry it is common practice to transport a multiphase fluid containing crude oil or condensate, water and gas from a well through a single pipeline system to a process facility. For example, in case of offshore oil production crude oil, production water and associated gas are generally simultaneously transported through a single subsea pipeline to gas/liquid separating equipment located onshore or on an offshore platform. Several flow regimes are known to occur in such a stream of multiphase fluid, including stratified flow, core flow, mist flow and slug flow. Of these flow regimes slug flow is generally to be avoided as it consists of alternating batches of liquid (termed slugs) and gas surges. Under certain flow conditions growth of liquid slugs may easily occur, which leads to severe slugging whereby a flow pattern of alternating production starvation (no flow), large liquid slugs and strong gas surges at the exit of the flowline system occur. Large liquid slugs can also be generated by operational changes, e.g. the increase of the fluid production during the start-up of a pipeline. Supplying such an alternating pattern of liquid slugs and gas surges to a gas/liquid separator strongly reduces the efficiency of the separator, as the gas/liquid separator must be operated with acceptable pressure fluctuations and should deliver an acceptably low liquid content in the gas outlet conduit and an acceptably low gas content in the liquid outlet conduit.

A method for preventing slug growth in a pipeline system during simultaneous transportation of a gas and a liquid through the pipeline system is disclosed in Oil & Gas journal, Nov. 12, 1979. In this known method a valve is arranged at the top of a riser, which valve is manually or automatically regulated so as to minimise the pipeline pressure upstream of the riser and to minimise the differential pressure fluctuations in the riser. Transmitters are used to transmit pressure signals for regulating the valve, which transmitters are installed at a subsea part of the pipeline system. This known method is based on the assumptions that severe slugging only occurs in pipelines having a section of downward inclination when seen in the direction of flow and that slug growth can be prevented by regulating the volumetric fluid flux as a function of fluid pressure variations.

JP-A-63-274408 discloses a separator control apparatus which adjusts a valve in a gas outlet of a gas liquid separator by adding the outputs of a supersonic multiphase flowmeter in the inlet of the separator and of a manometer within the separator to exert a constant pressure in the separator.

EP-B-410522 discloses a method of preventing slug growth in a stream of multiphase fluid flowing from a flowline into a gas/liquid separator, whereby fluid rate control means are provided to manipulate the fluid flow rate.

This known method comprises measuring the liquid flow rate in the liquid outlet of the separator and the gas flow rate in the gas outlet thereof, determining the fluid flux defined as the sum of the liquid flow rate and the gas flow rate, and operating the fluid flow rate control means so as to reduce a variation of the fluid flux. A drawback of this known method and of the method disclosed in JP-A-63-274408 is that measurement of the sum of the liquid and gas flow rates in a multiphase fluid stream is difficult and requires complex measuring equipment.

US patent Nos. 5,256,171; 5,377,714; 5,.494,067; 5,544,672 and 5,711,338 disclose slug suppression methods in which the liquid level in a gas-liquid separation vessel is held as constant as possible. A disadvantage of these methods is that said liquid level is not always the best control parameter and that occasionally, e.g. during start-up still manual control or intervention is required.

The method according to the preamble of claim 1 is known from EP-B-767699.

This known method comprises the steps of:
- measuring at least one control variable selected from the group of the liquid level in the separator, the liquid flow rate in the liquid outlet of the separator, the gas flow rate in the gas outlet of the separator, the sum of the liquid flow rate in the liquid outlet and the gas flow rate in the gas outlet, and the fluid pressure at or near the separator; and
- dynamically adjusting liquid and gas flow control valves in the liquid and gas outlets so as to reduce a difference between one or more selected control variables and a selected reference value of the selected control variable(s).

Field experience with the method according to EP-B-767699 has learned that this known method significantly suppresses slug flow in a multi-phase fluid stream but that, due to the origin of the liquid slugs, some slugs were suppressed to a more limited extent than other slugs.

The method and system according to the present invention aims to provide a slug suppression and control method which even further controls slug flow than the known method and that can be operated automatically without requiring human intervention.

### Summary of the Invention

The method and system according to the invention are characterized in that the selected control variable which is used to adjust the liquid and/or gas flow control valve is changed automatically from time to time if one or more control variables reaches a pre-set value, wherein during normal operation the control variable is the sum (Q_{L}+Q_{G}) of the liquid flow rate in the liquid outlet and the gas flow rate in the gas outlet, and wherein the control variable is changed into the liquid flow rate (Q_{L}) in the liquid outlet if the liquid level (L_{LIQ}) in the separator or the liquid flow rate (Q_{L}) in the liquid outlet reaches a pre-set value and wherein the selected control variable is changed back again into the sum (Q_{L}+Q_{G}) of the liquid flow rate in the liquid outlet and the gas flow rate in the gas outlet when said liquid level (L_{LIQ}) in the separator or liquid flow rate (Q_{L}) in the liquid outlet is below said pre-set value.

The method and system according to the invention are able to suppress and control liquid slugs and gas surges in multiphase fluid streams automatically without human intervention. Typically during start up the liquid valve is closed and the gas valve is operated such that the fluid pressure at or near the entrance of the separation remains fairly constant. When the liquid level in the separator has reached a pre-set level the liquid valve is opened automatically and dynamically adjusted to maintain the liquid level at said pre-set value whereas the gas valve is dynamically adjusted such that the mixture flow rate remains fairly constant. This hybrid constant liquid level/constant mixture flow rate control mode remains the default control mode until the liquid level in the separator and/or the liquid flow in the liquid outlet reaches a pre-set threshold value whereupon the system is automatically adjusted such that the gas valve is temporarily closed substantially and the liquid valve is dynamically adjusted such that the liquid flow rate in the liquid outlet remains fairly constant.

As soon as the liquid level in the separator and/or liquid flow rate in the liquid outlet is again below said pre-set threshold value the system is automatically switched back into the default hybrid constant liquid level/constant mixture flow rate control mode.

The gas/liquid separator described hereinbefore can have sufficient capacity for processing the fluid stream, in which case said separator can be the only separator in the system. Alternatively, the separator can form a mini-separator which is located upstream a slug catching separator. The mini-separator then forms a primary separator of which the gas outlet and the liquid outlet debouch into the slug catching separator which forms a secondary separator.

### Description of a preferred embodiment

The invention will now be described in more detail and by way of example with reference to the accompanying drawings in which:
Fig. 1 shows schematically a flowline system for carrying out the method according to the invention;
Fig. 2 shows schematically how the system operates in its default mode; and
Fig. 3 shows schematically how the system occasionally operates in its constant liquid flow and no gas flow mode.

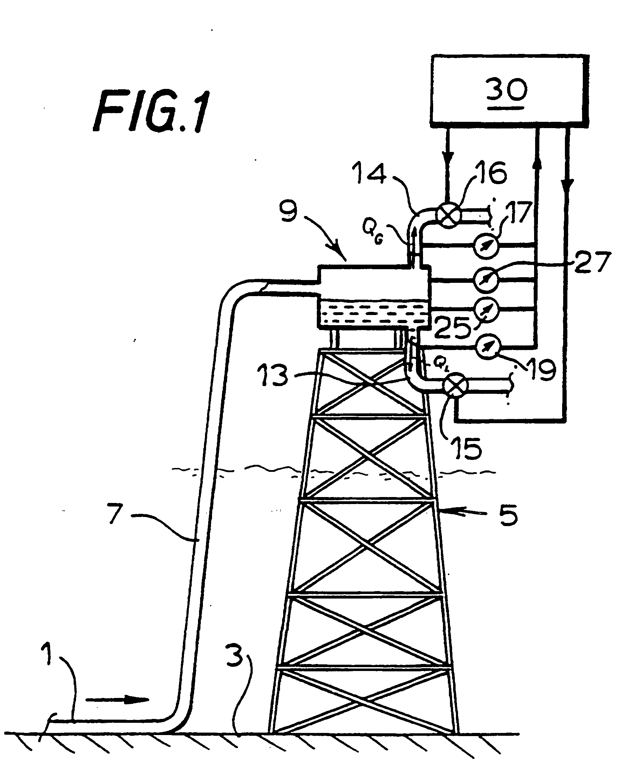

The flowline system of Fig. 1 comprises an oil and/or gas production pipeline 1 extending on the seafloor 3 from a wellhead (not shown) of an oil and/or gas production well to an offshore platform 5, an upwardly inclined pipeline section in the form of a riser 7 connected to the platform 5 and a gas/liquid separator 9 having a liquid outlet conduit 13 and a gas outlet conduit 14. The liquid outlet conduit 13 is provided with a liquid flow control valve 15, and the gas outlet conduit is provided with a gas flow control valve 16. The valves 15, 16 can be of any suitable type such as vortex amplifier disclosed in the Oil man, August 1987, pp. 82-85. A gas flow meter 17 is provided in the gas outlet conduit 14 and a liquid flow meter 19 is provided in the liquid outlet conduit 13. The separator 9 is further provided with a liquid level gauge 25 and a pressure gauge 27. A control system 30 is provided which receives signals from the gas flow meter 17, the liquid flow meter 19, the liquid level gauges 25, and the pressure gauge 27, which control system 30 controls the valves of 15,16 in a manner depending on the signals received by the control system 30. The liquid outlet conduit 13 and the gas outlet conduit are in fluid communication with the interior of a slug-catching separator (not shown) located downstream the separator 9. The slug-catching separator is of a size considerably larger than the separator 9.

During start up of the system the liquid valve 15 is closed until the liquid level L_{LIQ} in the separator 9 reaches a selected level, whereas the gas valve (16) is adjusted dynamically such that the pressure measured by the pressure gauge 27 is maintained at a selected level.

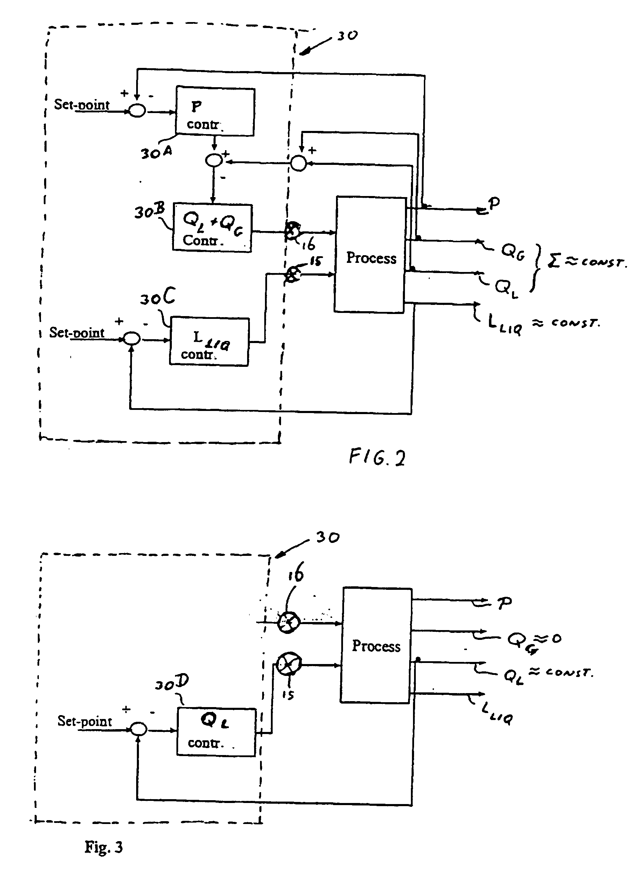

As soon as the liquid level L_{LIQ} in the separator 9 has reached a selected level the system is automatically switched into the default total volumetric flow control mode shown in Fig. 2.

In the total volumetric flow control mode shown in Fig. 2 the liquid valve 15 is controlled to maintain a liquid level L_{LIQ} set point. In addition, the gas valve 16 is controlled to maintain a total volumetric flow Q_{L} + Q_{G} set-point. The actual flow rate Q_{L} and Q_{G} are measured by the gas and liquid flow meters 17, 19 in the liquid and gas outlets 14 and 13. The sum of the output of the flow meters 17 and 19, is the variable to be controlled. The set-point of the total volumetric flow controller 30B is given by a pressure controller 30A in combination with algorithms which depend on the pipeline system 1,7.

For slugs, the total volumetric flow control scheme shown in Fig. 1 will not work optimally due to the fact that the level controller 30C is not bounded by the total volumetric flow. It will open the liquid valve 15 completely to keep the liquid level on its set-point. Therefore, the liquid flow control mode of operation shown in Fig. 3 is switched on when: (i) the liquid level L_{LIQ} in the separator 9 reaches a threshold value or (ii) the liquid flow rate Q_{L} in the liquid outlet 13 reaches a threshold value. The threshold value of the liquid flow rate Q_{L} may depend on external factors such as the liquid level or liquid drainage capacity of the first stage separator. This threshold value can also be used as the set-point of the liquid flow controller 30C. The set-point of the total volumetric flow remains constant during liquid flow control.

Liquid flow control prevents acceleration of the slug. When the liquid level in the mini-separator 9 is decreased and the liquid flow rate is below the threshold value, the total volumetric control mode shown in Fig. 2 is switched on again. In the total volumetric control mode, the compressed gas phase (behind the slug) can be produced without any gas surge.

## Claims

1. A method for suppressing and controlling liquid slugs and gas surges in a stream of multiphase fluid flowing from a flowline (1) into a gas/liquid separator (9) which has a liquid outlet (13) provided with a liquid flow control valve (15) and a gas outlet (14) provided with a gas flow control valve (16), the method comprising
- measuring at least one control variable selected from the group of the liquid level (L_{LIQ}) in the separator (9), the liquid flow rate (Q_{L}) in the liquid outlet (13), the gas flow rate (Q_{G}) in the gas outlet (14), the sum (Q_{L}+Q_{G}) of the liquid flow rate in the liquid outlet (13) and the gas flow rate in the gas outlet (14), and the fluid pressure (P) at or near the separator (9);
- adjusting said liquid and gas flow control valves (15,16) so as tc reduce a difference between a selected control variable (Q_{L}+Q_{G}, Q_{L}, Q_{G}, P, L_{LIQ}) and a pre-set reference value of the selected control variable,
**characterized in that** the method further comprises
- changing the selected control variable (Q_{L}+Q_{G}, Q_{L}, Q_{G}, P, L_{LIQ}) from time to time automatically if one or more control variables reaches a pre-set value,
wherein during normal operation the selected control variable is the sum (Q_{L}+Q_{G}) of the liquid flow rate in the liquid outlet (13) and the gas flow rate in the gas outlet (14), and wherein the selected control variable is changed into the liquid flow rate (Q_{L}) in the liquid outlet (13) if the liquid level (L_{LIQ}) in the separator (9) or the liquid flow rate (Q_{L}) in the liquid outlet (13) reaches a pre-set value and wherein the control variable is changed back again into the sum (Q_{L}+Q_{G}) of the liquid flow rate in the liquid outlet (13) and the gas flow rate in the gas outlet (14) when said liquid level (L_{LIQ}) in the separator (9) or liquid flow rate (Q_{L}) in the liquid outlet (13) is below said pre-set value.

2. The method of claim 1, wherein during normal operation the liquid flow control valve (15) is adjusted such that variations of the liquid level (L_{LIQ}) in the separator (9) are minimized, and the gas flow control valve (16) is adjusted such that variations in the sum of the liquid and gas flow rates (Q_{L}+Q_{G}) in said outlets (13,14) are minimized.

3. The method of claim 1, wherein during normal operation the sum (Q_{L}+Q_{G}) of the liquid flow rate in the liquid outlet (14) and the gas flow rate in the gas outlet (13) is controlled by dynamically adjusting the position of the gas flow rate control valve (16) by means of a mixture flow controller (30B) which is set to maintain a total volumetric flow set-point and by dynamically adjusting the position of the liquid flow rate control valve (15) by means of a liquid level controller (30C)

4. The method of claim 3, wherein, if the liquid flow rate (Q_{L}) is selected as the control variable, the gas flow control valve (16) is substantially closed and the liquid flow control valve (15) is dynamically adjusted by a liquid flow controller (30D) which is set to maintain a liquid flow set-point.

5. The method of claim 4, wherein, if the liquid flow rate (Q_{L}) is selected as the control variable, the gas flow control valve (16) is substantially closed by closing off or choking the gas flow control valve (16) until the gas pressure reaches an unsafe level at which the gas flow control valve (16) is operated as a pressure relief valve.

6. The method of any one of the previous claims, wherein during a start-up period the liquid valve (15) is closed until the liquid level in the separator (9) reaches a selected level, whereas the gas-valve (16) is adjusted dynamically such that the pressure measured by a pressure gauge (27) of the separator (9) is maintained at a selected level.

7. A system for suppressing and controlling liquid slugs in a stream of multi-phase fluid flowing from a flowline (1) into a gas/liquid separator or slugcatcher (9) having a liquid outlet (13) provided with a liquid flow control valve (15) and a gas outlet (14) provided with a gas flow control valve (16), the system comprising a control system (30) for dynamically adjusting the position of said gas and liquid control valves (15,16) in response to measurement of at least one control variable selected from the group of the liquid level (L_{LIQ}) in the separator (9), the liquid flow rate of (Q_{L}) in the liquid outlet (13), the gas flow rate (Q_{G}) in the gas outlet (14) and the sum of the liquid and gas flow rates (Q_{L}+Q_{G}) in said outlets (13,14),
**characterized in that** the control system (30) is adapted to change from time to time the control variable (L_{LIQ}, Q_{L}, Q_{G}, Q_{L}+Q_{G}) in response to which said gas and liquid control valves (15,16) are adjusted if a selected control variable has reached a pre-set value,
wherein during normal operation the control variable is the sum (Q_{L}+Q_{G}) of the liquid flow rate in the liquid outlet (13) and the gas flow rate in the gas outlet (14), and wherein the control variable is changed into the liquid flow rate (Q_{L}) in the liquid outlet (13) if the liquid level (L_{LIQ}) in the separator (9) and/or the liquid flow rate Q_{L} in the liquid outlet (13) reaches the pre-set value and wherein the control variable is changed back again into the sum (Q_{L}+Q_{G}) of the liquid flow rate in the liquid outlet (13) and the gas flow rate in the gas outlet (14) when said liquid level (L_{LIQ}) in the separator (9) or liquid flow rate (Q_{L}) in the liquid outlet (13) is below said pre-set value.

8. The system of claim 7, wherein the control system (30) is set such that during normal operation the liquid flow control valve (15) is adjusted such that variations of the liquid level (L_{LIQ}) in the separator (9) are minimized and the gas flow control valve (16) is adjusted that variations in the sum of the liquid and gas flow rates (Q_{L}+Q_{G}) in said outlets (13,14) are minimized, and wherein the control system (30) substantially closes the gas flow control valve (16) and the liquid flow control valve (15) is adjusted such that variations in the liquid flow rate (Q_{L}) in the liquid outlet (13) are minimized if either the liquid level (L_{LIQ}) in the separator (9) reaches a threshold level or if the liquid flow rate (Q_{L}) in the liquid outlet (13) reaches a threshold value.

9. The system of claim 7 wherein the flow line (1) forms part of a hydrocarbon fluid production system through which a mixture of crude oil, condensate, water and/or natural gas is produced from one or more hydrocarbon fluid production wells.

10. The system of claim 9 wherein the separator (9) is a primary separator and wherein the liquid and gas outlets (13,14) are fluid inlet conduits for a secondary separator or slugcatcher which has a larger volume than the primary separator (9).

11. The system of claim 10 wherein the separators are mounted on an offshore platform (5), on the seabed (3) onshore, or downhole in an oil and/or gas production well.

## Patentansprüche

1. Verfahren zum Unterdrücken und Steuern von flüssigen Ablagerungen und Gasentwicklungen in einem Strom eines Mehrphasenfluids, der aus einer Strömungsleitung (1) in einen Gas-/Flüssigkeitsabscheider (9) strömt, der einen Flüssigkeitsauslaß (13) mit einem Flüssigkeitsstrom-Steuerventil (15), und einen Gasauslaß (14) mit einem Gasströmungs-Steuerventil (16) aufweist, wobei das Verfahren die Schritte umfaßt
- Messen zumindest einer Steuervariablen, die aus der Gruppe Flüssigkeitspegel (L_{LIQ}) im Abscheider, Flüssigkeitsströmungsrate (Q_{L}) im Flüssigkeitsauslaß (13), Gasströmungsrate (Q_{L}), im Gasauslaß (14), Summe (Q_{L} + Q_{G}) aus Flüssigkeitsströmungsrate im Flüssigkeitsauslaß (13) und Gasströmungsrate im Gasauslaß (14), und Fluiddruck (P) an oder nahe dem Abscheider (9) gewählt wird; und
- Einstellen der Flüssigkeits- und Gasströmungssteuerventile (15, 16), um eine Differenz zwischen einer gewählten Steuervariablen (Q_{L}+Q_{G}, Q_{L}, Q_{G}, P, L_{LIQ}) und einem voreingestellten Bezugswert der gewählten Steuervariable zu reduzieren;
**dadurch gekennzeichnet, daß** das Verfahren ferner umfaßt
- automatisches Ändern der gewählten Steuervariablen (Q_{L}+Q_{G}, Q_{L}, Q_{G}, P, L_{LIQ}) von Zeit zu Zeit, wenn eine oder mehrere Steuervariable einen voreingestellten Wert erreicht, wobei während des Normalbetriebes die gewählte Steuervariable die Summe (Q_{L}+Q_{G}) aus Flüssigkeitsströmungsrate im Flüssigkeitsauslaß (13) und der Gasströmungsrate im Gasauslaß (14) ist, und wobei die gewählte Steuervariable in die Flüssigkeitsströmungsrate (Q_{L}) im Flüssigkeitsauslaß (13) geändert wird, wenn der Flüssigkeitspegel (L_{LIQ}) im Abscheider oder die Flüssigkeitsströmungsrate (Q_{L}) im Flüssigkeitsauslaß (13) einen voreingestellten Wert erreicht, und wobei die gewählte Steuervariable in die Summe (Q_{L}+Q_{G}) aus Flüssigkeitsströmungsrate im Flüssigkeitsauslaß (13) und aus Gasströmungsrate im Gasauslaß (14) zurückgeändert wird, wenn der Flüssigkeitspegel (L_{LIQ}) im Abscheider (9) oder die Flüssigkeitsströmungsrate (Q_{L}) im Flüssigkeitsauslaß (13) unterhalb des voreingestellten Wertes ist.

2. Verfahren nach Anspruch 1, bei welchem während des Normalbetriebes das Flüssigkeitsströmungs-Steuerventil (15) derart eingestellt wird, daß Änderungen des Flüssigkeitspegels (L_{LIQ}) in dem Abscheider (9) minimiert werden, und das Gasströmungs-Steuerungsventil (16) so eingestellt wird, daß Änderungen in der Summe der Flüssigkeits- und Gasströmungsraten (Q_{L} + Q_{G}) in den Auslässen (13, 14) minimiert werden.

3. Verfahren nach Anspruch 1, bei welchem während des Normalbetriebes die Summe (Q_{L} + Q_{G}) aus Flüssigkeitsströmungsrate im Flüssigkeitsauslaß (14) und Gasströmungsrate im Gasauslaß (13) durch dynamisches Einstellen der Position des Gasströmungsraten-Steuerventiles (16) mittels einer Gemischströmungseinrichtung (30B) eingestellt wird, die so eingestellt ist, daß sie einen gesamtvolumetrischen Strömungseinstellpunkt aufrecht erhält, und durch dynamischen Einstellen der Position des Flüssigkeitsströmungsraten-Steuerventiles (15) mittels einer Flüssigkeitspegel-Steuereinrichtung (30C).

4. Verfahren nach Anspruch 3, bei welchem im Falle die Flüssigkeitsströmungsrate (Q_{L}) als Steuervariable gewählt wird, das Gasströmungs-Steuerventil (16) im wesentlichen geschlossen ist und das Flüssigkeitsströmungs-Steuerventil (15) dynamisch durch eine Flüssigkeitsströmungs-Steuereinrichtung (30D) eingestellt wird, die so eingestellt ist, daß sie einen Flüssigkeitsströmungs-Einstellpunkt festsetzt.

5. Verfahren nach Anspruch 4, bei welchem im Falle die Flüssigkeitsströmungsrate (Q_{L}) als Steuervariable gewählt wird, das Gasströmungs-Steuerventil (16) im wesentlichen geschlossen wird, durch Schließen oder Unterdrücken des Gasströmungs-Steuerventiles (16), bis der Gasdruck einen unsicheren Pegel erreicht, bei welchem das Gasströmungs-Steuerventil (16) als Gasentlastungsventil betätigt wird.

6. Verfahren nach einem der hervorgehenden Ansprüche, bei welchem während der Anlaufzeitspanne das Flüssigkeitsventil (15) geschlossen ist, bis der Flüssigkeitspegel im Abscheider (9) einen vorbestimmten Pegel erreicht, wogegen das Gasventil (16) dynamisch derart eingestellt wird, daß der von einem Druckmesser (27) des Abscheiders (9) gemessene Druck auf einem vorbestimmten Wert gehalten wird.

7. System zum Unterdrücken und Steuern von flüssigen Ablagerungen in einem Strom eines Mehrphasenfluids, das aus einer Strömungsleitung (1) in einen Gas/Flüssigkeitsabscheider oder Ablagerungsfänger (9) strömt, der einen Flüssigkeitsauslaß (13) mit einem Flüssigkeitsströmungs-Steuerventil (15) und einen Gasauslaß (14) mit einem Gasströmungs-Steuerventil (16) hat, wobei das System ein Steuersystem (30) zum dynamischen Einstellen der Position der Gas- und Flüssigkeitssteuerventile (15, 16) in Abhängigkeit von der Messung zumindest einer Steuervariablen aufweist, die aus der Gruppe Flüssigkeitspegel (L_{LIQ}) im Abscheider (9), Flüssigkeitsströmungsrate (Q_{L}) im Flüssigkeitsauslaß (13), Gasströmungsrate (Q_{G}) im Gasauslaß (14) und Summe von Flüssigkeits- und Gasströmungsraten (Q_{L}+Q_{G}) in den Auslässen (13, 14) gewählt wird,
- **dadurch gekennzeichnet, daß** das Steuersystem (30) befähigt ist, von Zeit zu Zeit die Variable (L_{LIQ}, Q_{L}, Q_{G}, Q_{L} + Q_{G}) zu steuern, worauf als Antwort darauf die Gas- und Flüssigkeitssteuerventile (15, 16) eingestellt werden, wenn eine gewählte Steuervariable einen vorbestimmten Wert erreicht, wogegen während des Normalbetriebes die Steuervariable die Summe (Q_{L} + Q_{G}) aus Flüssigkeitsströmungsrate im Flüssigkeitsauslaß (13) und der Gasströmungsrate im Gasauslaß (14) ist, und wobei die Steuervariable in die Flüssigkeitsströmungsrate (Q_{L}) im Flüssigkeitsauslaß (13) geändert wird, wenn der Flüssigkeitspegel (L_{LIQ}) im Abscheider (9) und/oder die Flüssigkeitsströmungsrate Q_{L} im Flüssigkeitsauslaß (13) den vorbestimmten Wert erreicht, und wogegen die Steuervariable in die Summe (Q_{L} + Q_{G}) aus Flüssigkeitsströmungsrate im Flüssigkeitsauslaß (13) und Gasströmungsrate im Gasauslaß (14) zurückgeändert wird, wenn der Flüssigkeitspegel (L_{LIQ}) im Abscheider (9) und die Flüssigkeitsströmungsrate (Q_{L}) im Flüssigkeitsauslaß (13) unterhalb des voreingestellten Wertes ist.

8. System nach Anspruch 7, bei welchem das Steuersystem (30) so eingestellt wird, daß während des Normalbetriebes das Flüssigkeitsströmungs-Steuerventil (15) derart eingestellt wird, daß Änderungen des Flüssigkeitspegels (L_{LIQ}) im Abscheider (9) minimiert werden, und das Gasströmungs-Steuerventil (16) so eingestellt wird, daß Änderungen in der Summe aus Flüssigkeits- und Gasströmungsraten (Q_{L} + Q_{G}) in den Auslässen (13, 14) minimiert werden, und wobei das Steuersystem (30) im wesentlichen das Gasströmungs-Steuerventil (16) schließt, und das Flüssigkeitsströmungs-Steuerventil (15) derart eingestellt wird, daß Änderungen in der Flüssigkeitsströmungsrate (Q_{L}) im Flüssigkeitsauslaß (13) minimiert werden, wenn entweder der Flüssigkeitspegel (L_{LIQ}) im Abscheider (9) einen Schwellenwert erreicht oder wenn die Flüssigkeitsströmungsrate (Q_{L}) im Flüssigkeitsauslaß (13) einen Schwellenwert erreicht.

9. System nach Anspruch 7, bei welchem die Strömungsleitung (1) Teil eines Kohlenwasserstoffluid-Fördersystems bildet, durch welches ein Gemisch aus Rohöl, Kondensat, Wasser und/oder Erdgas aus einer oder mehreren Kohlenwasserstofffluid-Förderbohrlöchern gefördert wird.

10. System nach Anspruch 9, bei welchem der Abscheider (9) ein Primärabscheider ist und bei welchem die Flüssigkeits- und Gasauslässe (13, 14) Flüssigkeitseinlaßleitungen für einen Sekundärabscheider oder Ablagerungsfänger sind, der ein größeres Volumen als der Primärabscheider (9) hat.

11. System nach Anspruch 10, bei welchem die Abscheider an einer Offshore-Plattform (5) am Meeresboden (3), Onshore, oder in einem Öl- und/oder Gasförderbohrloch montiert sind.

## Revendications

1. Procédé de suppression et de régulation de bouchons de liquide et d'à-coups de gaz dans un courant de fluide multiphase s'écoulant d'une conduite d'écoulement (1) dans un séparateur gaz/liquide (9), qui a une sortie de liquide (13) munie d'une soupape régulatrice de débit de liquide (15) et une sortie de gaz (14) munie d'une soupape régulatrice de débit de gaz (16), le procédé comprenant :
- la mesure d'au moins une variable de commande choisie dans le groupe du niveau de liquide (L_{LIQ}) dans le séparateur (9), du débit de liquide (Q_{L}) à la sortie de liquide (13), du débit de gaz (Q_{G}) à la sortie de gaz (14), de la somme (Q_{L}+Q_{G}) du débit de liquide à la sortie de liquide (13) et du débit de gaz à la sortie de gaz (14) et de la pression de fluide (P) dans le séparateur (9) ou à proximité de celui-ci;
- l'ajustement desdites soupapes régulatrices de débits de liquide et de gaz (15, 16) de façon à réduire une différence entre une variable de commande choisie (Q_{L}+Q_{G}, Q_{L}, Q_{G}, P, L_{LIQ}) et une valeur de référence pré-établie de la variable de commande choisie,
**caractérisé en ce que** le procédé comprend en outre :
- la modification de la variable de commande choisie (Q_{L}+Q_{G}, Q_{L}, Q_{G}, P, L_{LIQ}) de temps à autre automatiquement si une ou plusieurs variables de commande atteignent une valeur pré-établie, où, au cours d'un fonctionnement normal, la variable de commande choisie est la somme (Q_{L}+Q_{G}) du débit de liquide à la sortie de liquide (13) et du débit de gaz à la sortie de gaz (14) et où la variable de commande choisie passe au débit de liquide (Q_{L}) à la sortie de liquide (13) si le niveau de liquide (L_{LIQ}) dans le séparateur (9) ou le débit de liquide (Q_{L}) à la sortie de liquide (13) atteint une valeur pré-établie et où la variable de commande repasse encore à la somme (Q_{L}+Q_{G}) du débit de liquide à la sortie de liquide (13) et du débit de gaz à la sortie de gaz (14) lorsque ledit niveau de liquide (L_{LIQ}) dans le séparateur (9) ou ledit débit de liquide (Q_{L}) à la sortie de liquide (13) est inférieur à ladite valeur pré-établie.

2. Procédé selon la revendication 1, dans lequel au cours d'un fonctionnement normal, la soupape régulatrice de débit de liquide (15) est ajustée pour que les variations du niveau de liquide (L_{LIQ}) dans le séparateur (9) soient minimisées et la soupape régulatrice de débit de gaz (16) est ajustée pour que les variations de la somme des débits de liquide et de gaz (Q_{L}+Q_{G}) auxdites sorties (13, 14) soient minimisées.

3. Procédé selon la revendication 1, dans lequel, au cours d'un fonctionnement normal, la somme (Q_{L}+Q_{G}) du débit de liquide à la sortie de liquide (14) et du débit de gaz à la sortie de gaz (13) est réglée par ajustement dynamique de la position de la soupape régulatrice de débit de gaz (16) au moyen d'un régulateur de débit de mélange (30B) qui est réglé pour maintenir un point de consigne d'écoulement volumétrique total et par ajustement dynamique de la position de la soupape régulatrice de débit de liquide (15) au moyen d'un régulateur de niveau de liquide (30C).

4. Procédé selon la revendication 3, dans lequel, si le débit de liquide (Q_{L}) est choisi comme variable de commande, la soupape régulatrice de débit de gaz (16) est sensiblement fermée et la soupape régulatrice de débit de liquide (15) est ajustée de manière dynamique par un régulateur de débit de liquide (30D) qui est réglé pour maintenir un point de consigne de débit de liquide.

5. Procédé selon la revendication 4, dans lequel, si le débit de liquide (Q_{L}) est choisi comme variable de commande, la soupape régulatrice de débit de gaz (16) est sensiblement fermée en fermant ou en étranglant la soupape régulatrice de débit de gaz (16) jusqu'à ce que la pression du gaz atteigne un niveau dangereux où la soupape régulatrice de débit de gaz (16) opère en soupape de surpression.

6. Procédé selon l'une quelconque des revendications précédentes, dans lequel, au cours d'une période de démarrage, la soupape de liquide (15) est fermée jusqu'à ce que le niveau de liquide dans le séparateur (9) atteigne un niveau choisi, tandis que la soupape de gaz (16) est ajustée de manière dynamique de sorte que la pression mesurée par un manomètre (27) du séparateur (9) soit maintenue à un niveau choisi.

7. Système de suppression et de régulation de bouchons de liquide dans un courant de fluide multiphase s'écoulant d'une conduite d'écoulement (1) dans un séparateur gaz/liquide ou capteur de bouchons (9) ayant une sortie de liquide (13) munie d'une soupape régulatrice de débit de liquide (15) et une sortie de gaz (14) munie d'une soupape régulatrice de débit de gaz (16), le système comprenant un système de réglage (30) pour ajuster de manière dynamique la position desdites soupapes régulatrices de débit de gaz et de liquide (15, 16) en réponse à la mesure d'au moins une variable de commande choisie dans le groupe du niveau de liquide (L_{LIQ}) dans le séparateur (9), du débit de liquide (Q_{L}) à la sortie de liquide (13), du débit de gaz (Q_{G}) à la sortie de gaz (14) et de la somme des débits de liquide et de gaz (Q_{L}+Q_{G}) auxdites sorties (13, 14),
**caractérisé en ce que** le système de réglage (30) est à même de modifier de temps à autre la variable de commande (L_{LIQ}, Q_{L}, Q_{G}, Q_{L}+Q_{G}), en réponse de quoi lesdites soupapes régulatrice de gaz et de liquide (15, 16) sont ajustées si une variable de commande a atteint une valeur pré-établie,
dans lequel, au cours d'un fonctionnement normal, la variable de commande est la somme (Q_{L}+Q_{G}) du débit de liquide à la sortie de liquide (13) et du débit de gaz à la sortie de gaz (14), dans lequel la variable de commande passe au débit de liquide (Q_{L}) à la sortie de liquide (13) si le niveau de liquide (L_{LIQ}) dans le séparateur (9) et/ou le débit de liquide (Q_{L}) à la sortie de liquide (13) atteint ou atteignent une valeur pré-établie et dans lequel la variable de commande repasse à nouveau à la somme (Q_{L}+Q_{G}) du débit de liquide à la sortie de liquide (13) et du débit de gaz à la sortie de gaz (14) lorsque ledit niveau de liquide (L_{LIQ}) dans le séparateur (9) ou le débit de liquide (Q_{L}) à la sortie de liquide (13) est inférieur à ladite valeur pré-établie.

8. Système selon la revendication 7, dans lequel le système de réglage (30) est réglé de sorte qu'au cours d'un fonctionnement normal, la soupape régulatrice de débit de liquide (15) est ajustée de sorte que les variations du niveau de liquide (L_{LIQ}) dans le séparateur (9) soient minimisées et que la soupape régulatrice de débit de gaz (16) soit ajustée de sorte que les variations de la somme des débits de liquide et de gaz (Q_{L}+Q_{G}) auxdites sorties (13, 14) soient minimisées et dans lequel le système de réglage (30) ferme sensiblement la soupape régulatrice de débit de gaz (16) et la soupape régulatrice de débit de liquide (15) est ajustée de sorte que les variations de débit de liquide (Q_{L}) à la sortie de liquide (13) soient minimisées si le niveau de liquide (L_{LIQ}) dans le séparateur (9) atteint un niveau de seuil ou si le débit de liquide (Q_{L}) à la sortie de liquide (13) atteint une valeur de seuil.

9. Système selon la revendication 7, dans lequel la conduite d'écoulement (1) fait partie d'un système de production de fluides hydrocarbonés par lequel un mélange de pétrole brut, de condensat, d'eau et/ou de gaz naturel est produit par un ou plusieurs puits de production de fluides hydrocarbonés.

10. Système selon la revendication 9, dans lequel le séparateur (9) est un séparateur primaire et dans lequel les sorties de liquide et de gaz (13, 14) sont des conduites d'entrée de fluide pour un séparateur secondaire ou capteur de bouchons qui a un volume supérieur à celui du séparateur primaire (9).

11. Système selon la revendication 10, dans lequel les séparateurs sont montés sur une plateforme offshore (5), au fond de la mer (3) au large ou sur un trou d'exploitation dans un puits de production à la fois de pétrole et/ou de gaz.
